(19) Europäisches Patentamt
European Patent Office
Office européen des brevets

(11) **EP 4 692 265 A1**

(12) **EUROPEAN PATENT APPLICATION**
published in accordance with Art. 153(4) EPC

(43) Date of publication:
**11.02.2026 Bulletin 2026/07**

(21) Application number: **24780464.4**

(22) Date of filing: **27.03.2024**

(51) International Patent Classification (IPC):
***C09J 7/38*** (2018.01)  ***C09J 133/00*** (2006.01)

(52) Cooperative Patent Classification (CPC):
**C09J 7/38; C09J 133/00**

(86) International application number:
**PCT/JP2024/012271**

(87) International publication number:
**WO 2024/204362 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023058693**

(71) Applicant: **Nitto Denko Corporation
Ibaraki-shi, Osaka 567-8680 (JP)**

(72) Inventors:
• **TSUKAMOTO, Narumi
Ibaraki-shi, Osaka 567-8680 (JP)**
• **MORISHITA, Hiromitsu
Ibaraki-shi, Osaka 567-8680 (JP)**
• **SHIMOKAWA, Kayo
Ibaraki-shi, Osaka 567-8680 (JP)**
• **AOKI, Yohei
Ibaraki-shi, Osaka 567-8680 (JP)**

(74) Representative: **Gill Jennings & Every LLP
The Broadgate Tower
20 Primrose Street
London EC2A 2ES (GB)**

(54) **THREAD-SHAPED PRESSURE-SENSITIVE ADHESIVE BODY**

(57)     The present invention relates to a thread-like adhesive body, including: a core material; and an adhesive that covers a surface in a longitudinal direction of the core material, in which a standard deviation $3\sigma$ of lengths in a width direction of the thread-like adhesive body calculated by the following method is 100 $\mu m$ or less, and the core material is a multifilament thread having four or more filaments. (Calculation Method): An average value of the lengths in the width direction and the standard deviation $3\sigma$ of the lengths in the width direction of the thread-like adhesive body are values calculated by observing the thread-like adhesive body under a microscope, measuring lengths in the width direction at 10 points by an interval of 1 cm in the longitudinal direction, and calculating the average value and the standard deviation $3\sigma$ of these values. Note that the length in the width direction of the thread-like adhesive body is a maximum value at each measurement point.

*FIG. 1*

LOAD

2 b

EP 4 692 265 A1

# EP 4 692 265 A1

**Description**

TECHNICAL FIELD

The present invention relates to a thread-like adhesive body.

BACKGROUND ART

A thread-like adhesive body containing a core material and an adhesive is generally made by coating a periphery of the core material with the adhesive. For example, Patent Literature 1 discloses a thread-like adhesive body having a strong adhesive strength in which multi-filaments of four or more are used as a core material.

Such a thread-like adhesive body is an adhesive body that is thin and capable of conforming to complex shapes, and therefore can be suitably used even in cases where an installation space for the adhesive body is limited, such as for fixing linear members or narrow members in a desired shape, enabling applications in a variety of fields.

CITATION LIST

PATENT LITERATURE

Patent Literature 1: JP2020-76066A

SUMMARY OF INVENTION

TECHNICAL PROBLEM

In recent years, for example, in electronic devices such as mobile phones and smartphones, a waterproofing function has been required, and the thread-like adhesive body used to fix components in such applications are also required to have a waterproofing (water-stopping) function.

However, in the case of the thread-like adhesive body in the related art as described in Patent Literature 1, no study has been given to the waterproofing function.

The present invention has been made in consideration of the above-mentioned situation in the related art, and an object thereof is to provide a thread-like adhesive body having an excellent waterproofing property.

SOLUTION TO PROBLEM

As a result of diligent study to solve the above-mentioned problem, inventors of the present invention found that the above-mentioned problem can be solved by keeping a variation in length in a width direction of the thread-like adhesive body containing a core material and an adhesive that covers a surface of the core material to a predetermined value or less, thereby obtaining the present invention.

That is, the present invention relates to the following.

[1] A thread-like adhesive body, including:

a core material; and
an adhesive that covers a surface in a longitudinal direction of the core material, in which
a standard deviation $3\sigma$ of lengths in a width direction of the thread-like adhesive body calculated by the following method is 100 $\mu$m or less, and
the core material is a multifilament thread having four or more filaments.

(Calculation Method)

An average value of the lengths in the width direction and the standard deviation $3\sigma$ of the lengths in the width direction of the thread-like adhesive body are values calculated by observing the thread-like adhesive body under a microscope, measuring lengths in the width direction at 10 points by an interval of 1 cm in the longitudinal direction, and calculating the average value and the standard deviation $3\sigma$ of these values. Note that the length in the width direction of the thread-like adhesive body is a maximum value at each measurement point.

[2] The thread-like adhesive body according to [1], in which

a deposition amount of the adhesive is 20 mass% to 80 mass% relative to the core material.

[3] The thread-like adhesive body according to [1] or [2], in which
a twist factor of the core material is 25 to 120.

[4] The thread-like adhesive body according to [1] or [2], in which
the core material is a braided cord.

[5] The thread-like adhesive body according to [1] or [2], in which

the adhesive contains a base polymer and a tackifier resin, and
1 part by mass to 100 parts by mass of the tackifier resin is contained per 100 parts by mass of the base polymer.

[6] The thread-like adhesive body according to [1] or [2], in which
the adhesive is an acrylic adhesive.

ADVANTAGEOUS EFFECTS OF INVENTION

According to the present invention, a thread-like adhesive body having an excellent waterproofing property can be provided.

BRIEF DESCRIPTION OF DRAWINGS

FIG. 1 is a diagram illustrating one example of use of a thread-like adhesive body according to an embodiment of the present invention.
FIG. 2 is another diagram illustrating one example of use of the thread-like adhesive body according to the embodiment of the present invention.
FIG. 3 is a diagram illustrating a method for evaluating adhesive strength of the thread-like adhesive body according to the embodiment of the present invention.
FIG. 4 is a diagram illustrating the method for evaluating the adhesive strength of the thread-like adhesive body according to the embodiment of the present invention.
FIG. 5 is a diagram illustrating the method for evaluating the adhesive strength of the thread-like adhesive body according to the embodiment of the present invention.
FIG. 6 is a diagram illustrating a method for evaluating a waterproofing property of the thread-like adhesive body according to the embodiment of the present invention.
FIG. 7 is another diagram illustrating the method for evaluating the waterproofing property of the thread-like adhesive body according to the embodiment of the present invention.

DESCRIPTION OF EMBODIMENTS

Hereinafter, an embodiment of a thread-like adhesive body of the present invention will be described in detail.
Note that the present invention is not limited to the embodiment to be described below. When an expression "to" is used in the present specification, it is used as an expression including numerical values or physical property values before and after it.

[Thread-like Adhesive Body]

The thread-like adhesive body according to the embodiment of the present invention is a thread-like adhesive body including a core material and an adhesive that covers a surface in a longitudinal direction of the core material, in which a standard deviation $3\sigma$ of lengths in a width direction of the thread-like adhesive body calculated by the following method is 100 $\mu$m or less, and the core material is a multifilament thread having four or more filaments.

(Calculation Method)

An average value of the lengths in the width direction and the standard deviation $3\sigma$ of the lengths in the width direction of the thread-like adhesive body are values calculated by observing the thread-like adhesive body under a microscope, measuring lengths in the width direction at 10 points by an interval of 1 cm in the longitudinal direction, and calculating the average value and the standard deviation $3\sigma$ of these values. Note that the length in the width direction of the thread-like adhesive body is a maximum value at each measurement point.

Here, the expression "thread-like" refers to a shape in which a length in the longitudinal direction of the adhesive body is sufficiently long relative to a length in the width direction (direction perpendicular to the longitudinal direction), and a ratio (long axis/short axis) of a length of a long axis (the longest axis passing through a center of gravity of a cross-sectional shape (a shape of a cross section perpendicular to the longitudinal direction)) to a length of a short axis (the shortest axis passing through the center of gravity of the cross-sectional shape) in the cross-sectional shape is, for example, 200 or less, preferably 100 or less, more preferably 50 or less, still more preferably 10 or less, further preferably 5 or less, and particularly preferably 3 or less, and also refers to a shape capable of bending in various directions and at various angles like a thread.

The length in the width direction of the thread-like adhesive body refers to a length in a thickness direction (direction perpendicular to the longitudinal direction) of the thread-like adhesive body.

The thread-like adhesive body according to the embodiment of the present invention has a standard deviation $3\sigma$ of lengths in the width direction of 100 $\mu$m or less, and is a thread-like adhesive body having a small variation in length in the width direction. Therefore, gaps are less likely to occur in a bonded portion between an adherend and the thread-like adhesive body.

When such a thread-like adhesive body is used to bond adherends together to produce a bonded body, water is less likely to penetrate into a spatial region surrounded by the adherends and the thread-like adhesive body in the bonded body.

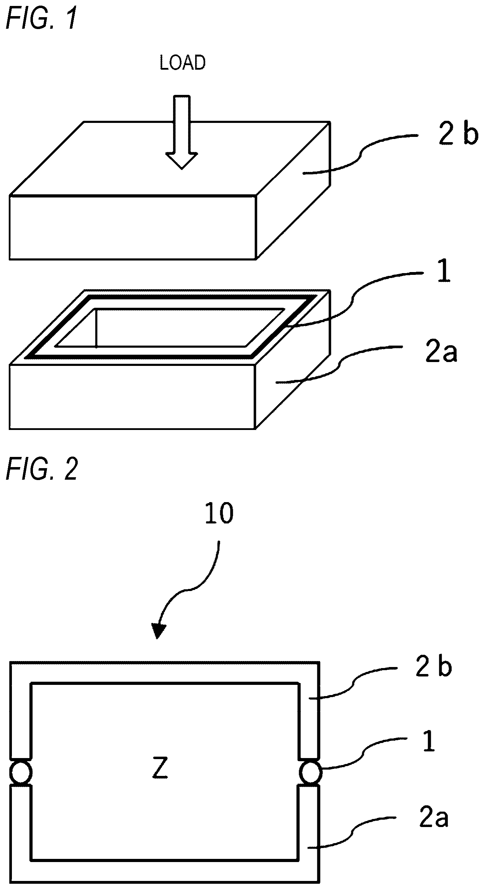

To explain in more detail, for example, as illustrated in FIG. 1, a thread-like adhesive body 1 of the present embodiment is placed on an outer peripheral portion of an open surface of a housing 2a having the open surface, with a tip portion thereof overlapped, and an outer peripheral portion of an open surface of another housing 2b is pressed to be bonded to produce a bonded body 10. FIG. 2 is a schematic cross-sectional view of the bonded body 10. In the bonded body 10, water is less likely to penetrate into an area Z surrounded by the housings 2a and 2b and the thread-like adhesive body 1.

In the present specification, a waterproofing property of the thread-like adhesive body refers to an ability to prevent water from penetrating into the area surrounded by the adherends and the thread-like adhesive body in the bonded body in which the adherends are bonded together using the thread-like adhesive body.

The thread-like adhesive body according to the embodiment of the present invention can be bent in various directions and at various angles, and therefore can be bent to match a shape of a bonding area, and can respond to a variety of shapes of the bonding area.

The core material and the adhesive constituting the thread-like adhesive body according to the embodiment of the present invention will be described below.

<Core Material>

The thread-like adhesive body according to the embodiment of the present invention contains the core material. The core material is a multifilament thread having four or more filaments.

When the core material is such a multifilament thread, sufficient strength and stable physical properties can be obtained. As a result, it is possible to obtain a thread-like adhesive body that has a small variation in quality, excellent strength, and excellent adhesive strength.

The number of filaments contained in the core material is 4 or more, and from the viewpoint of adhesive strength, the number is preferably 10 or more, and more preferably 20 or more.

On the other hand, if a thickness (fineness) of the core material is kept at the same level, as the number of filaments increases, each filament becomes thinner (has a smaller fineness). If each filament becomes too thin, it may result in a decrease in the strength of the core material and a decrease in handleability, and therefore, the number of filaments is preferably 2000 or less, more preferably 1500 or less, and particularly preferably 1000 or less.

There is no particular limitation on a type of resin used for the filaments, and the type of resin may be appropriately selected depending on required properties such as strength, mass, and hardness. For example, materials including polymeric materials such as thermoplastic polymers, thermosetting polymers, and rubbers can be used.

Specifically, polymeric materials such as rayon, cupra, acetate, promix, nylon, aramid, vinylon, vinylidene, polyvinyl chloride, acrylic, polyolefin (polyethylene, polypropylene, ethylene-propylene copolymer, ethylene-vinyl acetate copolymer, and the like), polyester resin (polyethylene terephthalate, and the like), vinyl chloride resin, vinyl acetate resin, polyimide resin, polyamide resin, fluororesin, polyurethane, polyclar, and polylactic acid: rubbers such as synthetic rubber (natural rubber, polyurethane, and the like), foams such as polyurethane foam and polychloroprene rubber foam; and the like can be used. Among these, polyester resin is preferred, and polyethylene terephthalate is more preferred.

A content of the filaments in the core material is preferably 10 mass% to 100 mass%, more preferably 50 mass% to 100 mass%, and particularly preferably 80 mass% to 100 mass%.

The core material may contain various additives such as a filler (an inorganic filler, an organic filler or the like), an anti-aging agent, an antioxidant, an ultraviolet absorber, an antistatic agent, a lubricant, a plasticizer, and a colorant (a pigment, a dye, or the like) as necessary. The known or common surface treatment such as a corona discharge treatment, a plasma treatment or application of an undercoat agent may be performed on a surface of the core material.

A shape of the core material is not particularly limited, and may be appropriately adjusted depending on required properties such as strength, mass, and hardness.

A cross-sectional shape of the core material is typically circular, and may be various shapes such as an elliptical shape and a polygonal shape in addition to the circular shape, as long as the waterproofing property is ensured.

The core material may be a non-twisted multifilament thread formed by doubling four or more filaments, or may be a twisted multifilament thread.

The core material may contain four or more filaments, and may be a combined thread obtained by twisting the filaments and spun threads, finished threads, hollow threads, or the like together. Examples of the finished threads include those have been subjected to crimping process or bulking processes and are generally called textured threads, bulky threads, and stretch threads.

A thickness of the core material is not particularly limited, and may be appropriately adjusted so that the thickness of the thread-like adhesive body is appropriate depending on a use thereof, but may be, for example, 200 $\mu$m or more, or may be 500 $\mu$m or more. The thickness may also be 200 $\mu$m or less, or 100 $\mu$m or less.

In the embodiment of the present invention, the core material may be twisted thread or non-twisted thread as described above, but one preferred aspect is to use twisted multifilament threads as the core material.

When the core material is twisted, the number of twists of the core material is preferably 70 twists/m or more. When the number of twists is 70 twists/m or more, a variation in diameter (length in the width direction) of the core material can be reduced, and a variation in length in the width direction of the obtained thread-like adhesive body can be reduced. The number of twists of the core material is more preferably 80 twists/m or more, and still more preferably 90 twists/m or more.

On the other hand, in order to ensure that the core material is sufficiently deformed when a plurality of articles are bonded together, and in order to appropriately increase a deposition amount of the adhesive per unit length, it is preferable that the core material is not twisted too tightly. Therefore, the number of twists of the core material is preferably 500 twists/m or less, more preferably 300 twists/m or less, and still more preferably 200 twists/m or less.

When the core material is twisted, it is preferable to also control a twist factor K represented by the following Formula (A) from the same viewpoint as above. The twist factor K is an index for discussing an influence of twisting (influence on cohesion, ease of deformation, the deposition amount of the adhesive, and the like of the core material) regardless of the thickness of the core material. In other words, the influence of the number of twists on the core material varies depending on the thickness of the core material, but if the twist factor K is the same, the influence of twisting on the core material is the same regardless of the thickness of the core material.

The twist factor K is preferably 24 or more, more preferably 25 or more, and still more preferably 31 or more, from the viewpoint of reducing the variation in diameter of the core material and reducing the variation in length in the width direction of the obtained thread-like adhesive body.

On the other hand, if the twist factor K is 120 or less, flexibility of the core material, and even the thread-like adhesive body, is improved, making it easier to be applied to curved line portions, bent portions, uneven portions or other complicated shapes and narrow portions. In addition, the deposition amount of the adhesive per unit length can be increased appropriately. Therefore, the twist factor K is preferably 120 or less, more preferably 100 or less, and still more preferably 80 or less.

In the thread-like adhesive body according to the embodiment of the present invention, the twist factor of the core material is preferably 25 to 120.

[Math. 1]

$$K = T / \sqrt{10000/D} \quad \cdot \cdot \cdot \quad (A)$$

In Formula (A), K is the twist factor, T is the number of twists (twists/m), and D is the fineness (dtex).

In the embodiment of the present invention, as one preferred aspect, the core material is, for example, a braided cord.

In the present specification, a braided cord refers to a cord-like object made by braiding a plurality of threads together, and in which the plurality of threads are regularly woven together. Such a braided cord has a small variation in diameter (length in the width direction). Therefore, by using a braided cord as the core material, it is possible to reduce the variation in diameter of the core material, thereby reducing the variation in length in the width direction of the obtained thread-like adhesive body.

The braided cord may be made by braiding a plurality of twisted threads or by braiding non-twisted threads.

In the embodiment of the present invention, the number of strands of the braided cord is preferably 4 or more, more preferably 5 or more, and particularly preferably 6 or more, from the viewpoint of the variation in length in the width direction of the core material. The number of strands in the braided cord is preferably 100 or less, more preferably 95 or less, and particularly preferably 90 or less, from the viewpoint of a degree of impregnation with the adhesive into the thread-like adhesive body.

A content of the core material in the thread-like adhesive body is preferably 10 mass% or more, more preferably 20 mass% or more, and particularly preferably 30 mass% or more, from the viewpoint of preventing a decrease in strength of the thread-like adhesive body. The content of the core material in the thread-like adhesive body is preferably 90 mass% or less, more preferably 80 mass% or less, and particularly preferably 70 mass% or less, from the viewpoint of preventing the core material from coming out to the surface.

<Adhesive>

The thread-like adhesive body according to the embodiment of the present invention contains the adhesive that covers the core material. The adhesive in the present embodiment can be formed by an adhesive composition, and the adhesive may be the adhesive composition. The adhesive may form a layer (adhesive layer).

It is preferable that the adhesive covers an entire circumference of the surface of the core material in the longitudinal direction. The entire circumference of the surface of the core material refers to an entire peripheral surface of the core material, and means the entire 360° circumference of the surface of the core material, centered on a center line of the core material in the longitudinal direction.

However, an end surface of the core material may or may not be covered with the adhesive. For example, when the thread-like adhesive body is cut during production or during use, the end surface of the core material may not be covered with the adhesive.

By covering the entire circumference of the surface of the core material in the longitudinal direction with the adhesive, a thread-like adhesive body having excellent strength can be obtained. This is presumably because the core material is not exposed to the surface, thereby preventing stress from concentrating on one part of the core material and causing breakage.

By covering the entire circumference of the surface of the core material in the longitudinal direction with the adhesive, gaps are less likely to occur at the bonded portion between the thread-like adhesive body and the adherend, making it possible to produce a thread-like adhesive body with an excellent waterproofing property.

The core material may be impregnated with the adhesive forming the adhesive layer. Here, "the core material is impregnated with the adhesive" means that the adhesive is present among the plurality of filaments in the core material. When the core material is impregnated with the adhesive, the adhesive and the core material maintain adhesion therebetween and are hard to peel off from each other, thereby improving the strength of the thread-like adhesive body.

The adhesive of the present embodiment is preferably formed from an adhesive containing a base polymer as a main component. A type of the adhesive is not particularly limited, and for example, an acrylic adhesive, a rubber-based adhesive, a vinyl alkyl ether-based adhesive, a silicone-based adhesive, a polyester-based adhesive, a polyamide-based adhesive, a urethane-based adhesive, a fluorine-based adhesive, and an epoxy-based adhesive can be used.

Among these, from the viewpoint of adhesiveness, the acrylic adhesives and rubber-based adhesives are preferred, and the acrylic adhesives are more preferred. Note that one kind of the adhesive may be used alone, or two or more kinds thereof may be used in combination.

In the present embodiment, the adhesive is preferably an acrylic adhesive.

The rubber-based adhesive contains, as a main component, a rubber-based polymer such as natural rubber, a styrene-isoprene-styrene block copolymer, a styrene-butadiene-styrene block copolymer, a styrene-ethylene-butylene-styrene block copolymer, a styrene-butadiene rubber, polybutadiene, polyisoprene, polyisobutylene, butyl rubber, chloroprene rubber, and silicone rubber.

Here, the term "acrylic adhesive" refers to an adhesive containing an acrylic polymer as a base polymer (a main component of polymer components, that is, a component that accounts for 50 mass% or more). The term "acrylic polymer" refers to a polymer having a monomer having at least one (meth)acryloyl group in one molecule (hereinafter, this may be referred to as an "acrylic monomer") as a main constituent monomer component (a main component of the monomer, that is, a component that accounts for more than 50 mass% of a total amount of monomers that constitute the acrylic polymer). In the present specification, the term "(meth)acryloyl" comprehensively refers to acryloyl and methacryloyl. Similarly, the term "(meth)acrylic acid ester" comprehensively refers to acrylic acid ester and methacrylic acid ester, and the term "(meth)acrylic" comprehensively refers to acrylic and methacrylic.

The acrylic polymer is preferably, for example, a polymer of a monomer raw material that contains alkyl (meth) acrylate as a main monomer and may further contain a sub-monomer copolymerizable with the main monomer. The main monomer herein refers to a component that accounts for more than 50 mass% of the monomer composition in the monomer raw material.

As the alkyl (meth) acrylate, for example, a compound represented by the following Formula (1) can be suitably used.

$$CH_2=C(R^1)COOR^2 \qquad (1)$$

Here, $R^1$ in the above Formula (1) represents a hydrogen atom or a methyl group. $R^2$ represents a chain alkyl group having 1 to 20 carbon atoms. Hereinafter, such a range of carbon atoms may be referred to as "$C_{1-20}$".

Examples of alkyl (meth)acrylates whose $R^2$ represents a chain alkyl group of $C_{1-20}$, include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, pentyl (meth)acrylate, isopentyl (meth)acrylate, hexyl (meth)acrylate, heptyl (meth)acry late, 2-ethylhexyl (meth)acrylate, octyl (meth)acrylate, isooctyl(meth)acrylate, nonyl (meth)acry late, isononyl (meth)acrylate, decyl (meth)acrylate, isodecyl (meth)acrylate, undecyl (meth)acry late, lauryl (meth)acrylate, tridecyl (meth)acrylate, tetradecyl (meth)acry late, pentadecyl (meth)acry late, hexadecyl (meth)acrylate, heptadecyl (meth)acrylate, octadecyl (meth)acrylate, nonadecyl (meth)acrylate, and eicosyl (meth)acrylate. These alkyl (meth)acrylates may be used alone, or two or more kinds of the alkyl (meth)acrylates may be used in combination.

From the viewpoint of adhesion stability and the like of the adhesive, it is appropriate to use alkyl (meth)acrylate whose $R^2$ represents a chain alkyl group of $C_{1-14}$ (for example, $C_{2-10}$, typically $C_{4-8}$), as the main monomer.

From the viewpoint of adhesive properties, it is preferable to use alkyl acrylate whose $R^1$ represents a hydrogen atom and $R^2$ represents a chain alkyl group of $C_{4-8}$ (hereinafter simply referred to as $C_{4-8}$ alkyl acrylate) as the main monomer. Preferred examples include n-butyl acrylate (BA) and 2-ethylhexyl acrylate (2EHA).

That is, it is preferable that the adhesive contains an acrylic polymer, and an amount of n-butyl acrylate or 2-ethylhexyl acrylate in the acrylic polymer is more than 50 mass% relative to a total amount of monomer components constituting the acrylic polymer. The amount is more preferably 60 mass% or more, and further preferably 70 mass% or more. From the viewpoint of preventing the decrease in adhesive strength, the amount is preferably 97 mass% or less, more preferably 95 mass% or less, and still more preferably 90 mass% or less.

In the present embodiment, the present invention can be preferably implemented in a mode in which the amount of $C_{4-8}$ alkyl acrylate is more than 50 mass%, may be 60 mass% or more, may be 70 mass% or more, or may be 85 mass% or more, in total, with respect to the total amount of the monomer components constituting the acrylic polymer. On the other hand, from the viewpoint of cohesive strength and the like, a proportion of $C_{4-8}$ alkyl acrylate in the monomer components is usually suitably 99.5 mass% or less, and may be 98 mass% or less (for example, less than 97 mass%).

The amount of alkyl (meth)acrylates in total relative to the total amount of the monomer components constituting the acrylic polymer is typically more than 50 mass%, and can be, for example, 70 mass% or more, and may be 85 mass% or more, or may be 90 mass% or more. Furthermore, a proportion of the alkyl (meth)acrylates in the monomer components is typically less than 100 mass%, and from the viewpoint of cohesive strength and the like, the proportion is usually appropriately 99.5 mass% or less, and may be 98 mass% or less (for example, less than 97 mass%).

Another preferred mode is that at least one selected from the group consisting of an alkyl(meth)acrylate having a straight-chain alkyl group with 1 to 3 carbon atoms, an alkyl(meth)acrylate having a branched-chain alkyl group with 3 or 4 carbon atoms, and an alicyclic monomer, is contained.

That is, it is also preferable that the adhesive composition forming the adhesive contains an acrylic polymer, and as a monomer component constituting the acrylic polymer, at least one selected from the group consisting of an alkyl(meth)acrylate having a straight-chain alkyl group with 1 to 3 carbon atoms, an alkyl(meth)acrylate having a branched-chain alkyl group with 3 or 4 carbon atoms, and an alicyclic monomer, is contained.

Homopolymers of these monomers have relatively high Tg. Hereinafter, these monomers are also referred to as high Tg monomers.

As the alicyclic monomer, a cycloalkyl (meth)acrylate having a cycloalkyl group with 4 to 10 carbon atoms which may have a substituent (for example, a straight-chain or branched-chain alkyl group with 1 to 6 carbon atoms) is preferable, a cycloalkyl acrylate having a cycloalkyl group with 4 to 10 carbon atoms which may have a substituent (for example, a straight-chain or branched-chain alkyl group with 1 to 6 carbon atoms) is more preferable, and cyclohexyl acrylate and 3,3,5-trimethylcyclohexyl (meth)acrylate are particularly preferable.

As the alkyl (meth)acrylate having a straight-chain alkyl group with 1 to 3 carbon atoms, an alkyl acrylate having a straight-chain alkyl group with 1 to 3 carbon atoms is preferred, and methyl acrylate is particularly preferred.

As the alkyl (meth)acrylate having a branched-chain alkyl group with 3 or 4 carbon atoms, an alkyl acrylate having a branched-chain alkyl group with 3 or 4 carbon atoms is preferred, and t-butyl acrylate is particularly preferred.

Among these, the high Tg monomer is preferably an alkyl acrylate having a straight-chain alkyl group with 1 to 3 carbon atoms, and is particularly preferably methyl acrylate.

In a mode in which the high Tg monomer is copolymerized with the acrylic polymer, an amount of the high Tg monomer in total relative to the total amount of the monomer components constituting the acrylic polymer is preferably 1 mass% or more, more preferably 3 mass% or more, and still more preferably 5 mass% or more. From the viewpoint of preventing the decrease in the adhesive strength of the adhesive, the amount is preferably 20 mass% or less, more preferably 18 mass% or less, and still more preferably 15 mass% or less.

That is, the amount in total of at least one selected from the group consisting of the alkyl(meth)acrylate having a straight-chain alkyl group with 1 to 3 carbon atoms, the alkyl(meth)acrylate having a branched-chain alkyl group with 3 or 4 carbon atoms, and the alicyclic monomer is preferably 1 mass% to 20 mass% relative to the total amount of the monomer components constituting the acrylic polymer.

The acrylic polymer may contain a carboxy group-containing monomer as a monomer component constituting the acrylic polymer. Examples of the carboxy group-containing monomer include ethylenically unsaturated monocarboxylic acids such as acrylic acid, methacrylic acid, carboxyethyl (meth)acrylate, carboxypentyl (meth)acrylate, crotonic acid, and isocrotonic acid; and ethylenically unsaturated dicarboxylic acids such as maleic acid, itaconic acid, and citraconic acid, and anhydrides thereof (such as maleic anhydride and itaconic anhydride). These may be used alone or in combination of two or more kinds thereof. Among these, preferred carboxy group-containing monomers include acrylic acid (AA) and methacrylic acid (MAA). AA is particularly preferred.

In a mode in which the carboxy group-containing monomer is copolymerized with the acrylic polymer, a content of the carboxy group-containing monomer relative to the total amount of the monomer components constituting the acrylic polymer is not particularly limited and can be, for example, 0.2 mass% or more (typically 0.5 mass% or more), and is usually appropriately 1 mass% or more, and may be 2 mass% or more, or 3 mass% or more.

An upper limit of the content of the carboxy group-containing monomer is not particularly limited, but from the viewpoint of maintaining good adhesive properties, the content can be, for example, 15 mass% or less, or may be 12 mass% or less, or may be 10 mass% or less.

The acrylic polymer can use, as a monomer component constituting the acrylic polymer, for example, the following functional group-containing monomers (however, not including the above-mentioned carboxy group-containing monomers) alone, or two or more kinds thereof may be used in combination.

Hydroxyl group-containing monomers: for example, hydroxyalkyl (meth)acrylates such as 2-hydroxyethyl (meth)acrylate, 2-hydroxypropyl (meth)acrylate, 3-hydroxypropyl (meth)acrylate, and 4-hydroxybutyl (meth)acrylate, unsaturated alcohols such as vinyl alcohol and allyl alcohol: and polypropylene glycol mono(meth)acrylate.

Amide group-containing monomers: for example, (meth)acrylamide, N,N-dimethyl(meth)acrylamide, N-butyl(meth)acrylamide, N-methylol(meth)acrylamide, N-methylolpropane(meth)acrylamide, N-methoxymethyl(meth)acrylamide, and N-butoxymethyl(meth)acrylamide.

Amino group-containing monomers: for example, aminoethyl (meth)acrylate, N,N-dimethylaminoethyl (meth)acrylate, and t-butylaminoethyl (meth)acrylate.

Epoxy group-containing monomers: for example, glycidyl (meth)acrylate, methyl glycidyl (meth)acrylate, and allyl glycidyl ether.

Cyano group-containing monomers: for example, acrylonitrile, and methacrylonitrile.

Keto group-containing monomers: for example, diacetone (meth)acrylamide, diacetone (meth)acrylate, vinyl methyl ketone, vinyl ethyl ketone, allyl acetoacetate, and vinyl acetoacetate.

Monomers having a nitrogen atom-containing ring: for example, N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, and N-(meth)acryloylmorpholine.

When the monomer components constituting the acrylic polymer include the functional group-containing monomer as described above, a content of the functional group-containing monomer in the monomer components is not particularly limited. From the viewpoint of adequately exerting the effects of the use of the functional group-containing monomer, the content of the functional group-containing monomer in the monomer components can be, for example, 0.1 mass% or more, is usually and appropriately 0.5 mass% or more, and may be 1 mass% or more. From the viewpoint of making it easy to balance adhesion performance, the content is usually and appropriately 40 mass% or less, preferably 20 mass% or less, and may be 10 mass% or less (for example, 5 mass% or less). The technique disclosed herein can also be preferably implemented in a mode in which the monomer components substantially include no functional group-containing monomer (for example, a mode in which the monomer components substantially include only an alkyl (meth)acrylate and a carboxy group-containing monomer). Here, the monomer components substantially including no functional group-containing monomer means that functional group-containing monomers are not used at least intentionally, and it is permissible for functional group-containing monomers to be unintentionally contained in an amount of, for example, 0.05 mass% or less (typically, 0.01 mass% or less).

The monomer components constituting the acrylic polymer may contain copolymerization components other than the above-mentioned monomers. Examples of other copolymerization components include vinyl ester monomers such as vinyl acetate, vinyl propionate, and vinyl laurate; aromatic vinyl compounds such as styrene, substituted styrenes (such as α-methylstyrene), and vinyl toluene; cycloalkyl (meth)acrylates such as cyclohexyl (meth)acrylate, cyclopentyl (meth)acrylate, and isobornyl (meth)acrylate; aromatic ring-containing (meth)acrylates such as aryl (meth)acrylates (such as phenyl (meth)acrylate), aryloxyalkyl (meth)acrylates (such as phenoxyethyl (meth)acrylate), and arylalkyl (meth) acrylates (such as benzyl (meth)acrylate); olefin monomers such as ethylene, propylene, isoprene, butadiene, and isobutylene; chlorine-containing monomers such as vinyl chloride and vinylidene chloride; isocyanate group-containing monomers such as 2-(meth)acryloyloxyethyl isocyanate; alkoxy group-containing monomers such as methoxyethyl (meth)acrylate and ethoxyethyl (meth)acrylate; vinyl ether monomers such as methyl vinyl ether and ethyl vinyl ether; and polyfunctional monomers having two or more (for example, three or more) polymerizable functional groups (for example, (meth)acryloyl groups) in one molecule, such as 1,6-hexanediol di(meth)acrylate and trimethylolpropane tri(meth) acrylate.

An amount of such other copolymerization components is not particularly limited and may be appropriately selected depending on purpose and application thereof, and from the viewpoint of adequately exerting the effects of use, the amount thereof is usually and appropriately 0.05 mass% or more, and may be 0.5 mass% or more. From the viewpoint of making it easy to balance the adhesion performance, the content of other copolymerization components in the monomer components is usually and appropriately 20 mass% or less, and may be set to 10 mass% or less (for example, 5 mass% or less). The present embodiment can also be preferably implemented in a mode in which the monomer components substantially include no other copolymerization components. Here, the monomer components substantially including no other copolymerization components means that other copolymerization components are not used at least intentionally, and it is permissible for other copolymerization components to be unintentionally contained in an amount of, for example, 0.01 mass% or less.

The adhesive may suitably contain various additives such as a tackifier resin, a crosslinking agent, a viscosity modifier (such as a thickener), a leveling agent, a release modifier, a plasticizer, a softener, a filler, a colorant (such as pigment or dye), a surfactant, an antistatic agent, a preservative, an anti-aging agent, an ultraviolet absorber, an antioxidant and a light stabilizer.

It is also preferable to add a crosslinking agent to the acrylic adhesive. As the crosslinking agent used for the acrylic adhesives, a commonly used crosslinking agent can be used, and examples thereof include silane-based crosslinking agents, organic peroxides, epoxy-based compounds, amino group-containing compounds, organic metal salts, metal alcoholates, metal chelates, hydrazide-based crosslinking agents, carbodiimide-based crosslinking agents, isocyanate-based crosslinking agents, and silanol-based crosslinking agents. Among these, organic metal salts, metal chelates, hydrazide-based crosslinking agents, and silane-based crosslinking agents are preferred since crosslinking is rapidly completed after the adhesive composition is dried. In the case of a water-dispersible adhesive, a hydrazide-based crosslinking agent and a silane-based crosslinking agent are particularly preferred. The crosslinking agent may be either oil-soluble or water-soluble, and may be used alone or in combination of two or more kinds thereof.

As the silane-based crosslinking agent, it is preferable to use a silane-based monomer copolymerizable with the above-mentioned alkyl (meth)acrylate. The silane-based monomer is not particularly limited as long as it is a polymerizable compound having a silicon atom, and a silane compound having a (meth)acryloyl group, such as a (meth) acryloyloxyalkylsilane derivative, is preferred because of excellent copolymerizability thereof with the above-mentioned alkyl (meth)acrylate. Examples of the silane-based monomer include γ-methacryloxypropyltrimethoxysilane, 3-acryloyloxypropyltrimethoxysilane, 3-methacryloyloxypropyltriethoxysilane, 3-acryloyloxypropyltriethoxysilane, 3-methacryloyloxypropylmethyldimethoxysilane, 3-acryloyloxypropylmethyldimethoxysilane, 3-methacryloyloxypropylmethyldiethoxysilane, and 3-acryloyloxypropylmethyldiethoxysilane These silane-based monomers can be used alone or in combination of two or more kinds thereof.

In addition to the above, examples of copolymerizable silane-based monomers that can be used include vinyltrimethoxysilane, vinyltriethoxysilane, 4-vinylbutyltrimethoxysilane, 4-vinylbutyltriethoxysilane, 8-vinyloctyltrimethoxysilane, 8-vinyloctyltriethoxysilane, 10-methacryloyloxydecyltrimethoxysilane, 10-acryloyloxydecyltrimethoxysilane, 10-methacryloyloxydecyltriethoxysilane, and 10-acryloyloxydecyltriethoxysilane.

The amount of the crosslinking agent used can be appropriately selected depending on the type of the monomer raw material and the application of an adhesive article. In the present embodiment, the amount of the crosslinking agent relative to 100 parts by mass of the monomer raw material (excluding the crosslinking agent) is preferably in the range of 0.005 parts by mass to 5 parts by mass, and more preferably 0.01 part by mass to 3 parts by mass.

In the present embodiment, other crosslinking agents may also be used, and crosslinking using other crosslinking agents, UV crosslinking, radiation crosslinking such as electron beam crosslinking, and the like can be applied. As the other crosslinking agent, a commonly used crosslinking agent can be used, and examples thereof include organic peroxides, epoxy compounds, amino group-containing compounds, organic metal salts, metal alcoholates, metal chelates, hydrazide crosslinking agents, carbodiimide crosslinking agents, isocyanate crosslinking agents, and silane or silanol crosslinking agents. Other crosslinking agents may be either oil-soluble or water-soluble.

In the adhesive according to the present embodiment, a tackifier resin can be preferably used.

As the tackifier resin, any appropriate tackifier resin can be used. Specific examples of the tackifier resin include: rosin-based tackifier resins (for example, unmodified rosin, modified rosin, rosin phenolic resin, rosin ester resin, and the like); terpene-based tackifier resins (for example, terpene-based resin, terpene phenolic resin, styrene modified terpene resin, aromatic modified terpene resin, hydrogenated terpene resin); hydrocarbon-based tackifier resins (for example, aliphatic hydrocarbon resin, aliphatic cyclic hydrocarbon resin, aromatic hydrocarbon resin (for example, styrene-based resin, xylene-based resin, and the like), aliphatic/aromatic petroleum resin, aliphatic/cycloaliphatic petroleum resin, hydrogenated hydrocarbon resin, coumarone-based resin, coumarone indene resin, and the like); phenol-based tackifier resins (for example, alkyl phenol resin, xylene formaldehyde resin, resol, novolak, and the like); ketone-based tackifier resins; polyamide-based tackifier resins; epoxy-based tackifier resins; and elastomer-based tackifier resins. Among these, the rosin-based tackifier resins, terpene-based tackifier resins, or hydrocarbon-based tackifier resins (styrene-based resin and the like) are preferable. The tackifier resins may be used alone or in combination of two or more kinds thereof.

In a mode in which the adhesive contains a tackifier resin, the amount of the tackifier resin added is preferably 1 part by mass or more, more preferably 10 parts by mass or more, still more preferably 20 parts by mass or more, and even more preferably 30 parts by mass or more, relative to 100 parts by mass of the base polymer. Furthermore, from the viewpoint of preventing the decrease in adhesive strength of the adhesive, the amount is preferably 100 parts by mass or less, more preferably 90 parts by mass or less, and still more preferably 70 parts by mass or less.

The adhesive composition that forms the adhesive contains the base polymer and the tackifier resin, and preferably contains 1 to 100 parts by mass of the tackifier resin relative to 100 parts by mass of the base polymer.

Note that as the adhesive composition, either type of a solvent type adhesive and a water-dispersible type adhesive may be used. From the viewpoint of enabling high-speed coating, being environmentally friendly, and having a small influence (swelling or dissolution) on the core material caused by the solvent, the water-dispersible adhesive composition is preferred. In the embodiment of the present invention, the adhesive is preferably an acrylic emulsion adhesive containing a water-dispersible acrylic polymer.

Specifically, the deposition amount of the adhesive (mass of the adhesive per unit length) is preferably 2 mg/m or more, more preferably 5 mg/m or more, and still more preferably 8 mg/m or more. On the other hand, when the deposition amount of the adhesive is excessive, it is necessary to apply the adhesive composition to the core material a plurality of times in the production process, or it takes time to dry the applied adhesive composition, resulting in a low production efficiency. Therefore, the deposition amount of the adhesive is preferably 200 mg/m or less, more preferably 180 mg/m or less, and still more preferably 160 mg/m or less.

From the viewpoint of ensuring the waterproofing property and the adhesive strength, the deposition amount of the adhesive is preferably 10 mass% or more, more preferably 20 mass% or more, and particularly preferably 30 mass% or more, relative to the core material. From the viewpoint of reducing the variation in length in the width direction of the thread-like adhesive body and preventing a decrease in strength of the thread-like adhesive body, the deposition amount is preferably 90 mass% or less, more preferably 80 mass% or less, and particularly preferably 70 mass% or less.

In the present embodiment, the deposition amount of the adhesive is preferably 20 mass% to 80 mass% relative to the core material.

The length in the width direction of the thread-like adhesive body according to the embodiment of the present invention is preferably 50 $\mu$m or more, and more preferably 100 $\mu$m or more, from the viewpoints of strength and handleability. The length in the width direction is preferably 2000 $\mu$m or less, and more preferably 1000 $\mu$m or less.

The standard deviation 3$\sigma$ of lengths in the width direction of the thread-like adhesive body according to the embodiment of the present invention is 100 $\mu$m or less. By using the thread-like adhesive body having a small variation in length in the width direction with 3$\sigma$ being 100 $\mu$m or less, gaps are less likely to occur at the bonded portion between the adherend and the thread-like adhesive body, and therefore, in a bonded body in which adherends are bonded together by the thread-like adhesive body of the embodiment of the present invention, water is less likely to penetrate into the area surrounded by the adherends and the thread-like adhesive body.

3$\sigma$ is 100 $\mu$m or less, and from the viewpoint of improving the waterproofing property, 3$\sigma$ is preferably 80 $\mu$m or less, and more preferably 60 $\mu$m or less. A lower limit of 3$\sigma$ is preferably 0 $\mu$m, but from the viewpoint of productivity, 3$\sigma$ is preferably 5 $\mu$m or more, and more preferably 10 $\mu$m or more.

As described above, in the present embodiment, an average value of the lengths in the width direction and the standard deviation 3$\sigma$ of the lengths in the width direction of the thread-like adhesive body are values calculated by observing the thread-like adhesive body under a microscope, measuring lengths in the width direction at 10 points by an interval of 1 cm in the longitudinal direction, and calculating the average value and the standard deviation 3$\sigma$ of these values. Note that the length in the width direction of the thread-like adhesive body is a maximum value at each measurement point.

Specifically, first, a ruler is placed on a stage of the microscope and a scale is calibrated. Thereafter, the thread-like adhesive body is placed on the stage and a position thereof is finely adjusted so that latitude lines of the grid-like scale displayed on an observation screen are parallel to the long axis of the thread-like adhesive body. Next, an observation magnification of the microscope is set to 30 times, and a length of the short axis (length in the width direction) of the thread-like adhesive body is measured at 10 points by an interval of 1 cm in the longitudinal direction.

The obtained measurement values ($X_1$, $X_2$, ..., $X_{10}$) were used to calculate an average value m (average value of the lengths in the width direction of the thread-like adhesive body). Then, the standard deviation $3\sigma$ ($\mu$m) is calculated by the following Formula (4).
[Math. 2]

$$3\sigma = 3 \times \sqrt{\frac{(X_1 - m)^2 + (X_2 - m)^2 + \cdots\cdots + (X_n - m)^2}{n - 1}} \qquad (4)$$

In Formula (4), $X_1$, $X_2$, ..., $X_n$ represent each measurement value, m represents the average value, and n represents an amount of data. In the measurement method of the present embodiment, n is 10.

[Method for Producing Thread-like Adhesive Body]

The thread-like adhesive body according to the embodiment of the present invention can be produced by known methods, for example, a method including a coating step of coating the core material with a coating liquid containing the adhesive.
The coating of the coating liquid may be carried out once or multiple times.
The core material may be coated with the coating liquid by, for example, dipping, immersion, application or the like, and may be dried by heat as necessary.
The heat drying may be performed, for example, at a temperature of 80°C to 120°C, preferably 90°C to 110°C, for example, for 20 seconds to 3 minutes, preferably 30 seconds to 2 minutes.
The coating liquid can be applied by using a common coater such as a gravure roll coater, a reverse roll coater, a kiss roll coater, a dip roll coater, a bar coater, a knife coater, and a spray coater.
A method for producing the thread-like adhesive body of the present embodiment may or may not include a fiber opening step. In the fiber opening step, when the core material is coated with the adhesive, the core material is opened by running the core material along a non-rotating roller.
When the thread-like adhesive body of the present embodiment is produced by a method without a fiber opening step, the porosity in the thread-like adhesive body can be adjusted to be high. When the thread-like adhesive body of the present embodiment is produced by a method including a fiber opening step, the porosity in the thread-like adhesive body can be adjusted to be low.
When the method for producing the thread-like adhesive body of the present embodiment includes a coating step, it is preferable that a roller is used in the coating step and a rotation speed of the roller is 0.3 times to 5.0 times a feeding speed of the core material.
The rotation speed of the roller is more preferably 0.4 times to 4.0 times the feeding speed of the core material, further preferably 0.5 times to 3.0 times, and particularly preferably 0.8 times to 1.5 times.
In the coating step, it is preferable to apply a tension of 6.0 mN/dtex or less to the core material.
The tension applied to the core material is preferably 0.2 mN/dtex to 6.0 mN/dtex, and more preferably 0.4 mN/dtex to 5.0 mN/dtex.
One preferred aspect of the thread-like adhesive body according to the embodiment of the present invention includes, after the coating step, a threading step of threading the core material coated with the coating liquid through a cylindrical or comb-shaped gap.
The method for producing the thread-like adhesive body according to one embodiment of the present invention is a method for producing a thread-like adhesive body containing a core material and an adhesive that covers a surface in the longitudinal direction of the core material, including a coating step of coating the core material with a coating liquid containing the adhesive, and a threading step of threading the core material coated with the coating liquid through a cylindrical or comb-shaped gap, in which the standard deviation $3\sigma$ of lengths in the width direction of the thread-like adhesive body is 100 $\mu$m or less, and the core material is a multifilament thread having four or more filaments.
For example, when the core material is coated with the coating liquid by dipping, the deposition amount of the coating liquid becomes relatively large, and the amount of the coating liquid depositing on the core material may become uneven due to influence of gravity during transportation and adhesion to rollers used. Therefore, by threading the core material coated with the coating liquid through a cylindrical or comb-shaped gap having a certain inner diameter, the unevenly applied coating liquid can be leveled, and the variation in length in the width direction of the obtained thread-like adhesive body can be reduced.

[Uses of Thread-like Adhesive Body]

The thread-like adhesive body according to the embodiment of the present invention has an excellent waterproofing property and can therefore be used for adhering articles that require a waterproofing property and a sealing property.

For example, in manufacture of an electronic device, the thread-like adhesive body of the embodiment of the present invention can be used to prevent water from entering a component that should be protected from water, such as a battery or a circuit board by bonding a housing (for example, a housing 2a in FIG. 1) that houses the component to another member (for example, a housing 2b in FIG. 1) using the thread-like adhesive body according to the embodiment of the present invention.

The thread-like adhesive body according to the embodiment of the present invention can be stuck to a narrow member or a narrow region while being prevented from protruding, and is also preferably applied to a complex shape such as a curved line, a curved surface, and an uneven shape, and is also preferred in terms of easy disassembly (rework). Furthermore, because of excellent adhesive strength thereof, the thread-like adhesive body can be used to adhere various items.

For example, when an adhesive tape is stuck to an adherend having a part with a complicated shape such as a curved line, a curved surface, or an uneven shape, a wrinkle or overlapping may occur in the adhesive tape in such a part, and it is difficult to finely stick the adhesive tape while preventing a protrusion, and the part where a wrinkle or overlapping occurs may cause a decrease in the waterproofing property and the adhesive strength. In order to apply the adhesive tape while preventing the occurrence of a wrinkle or overlapping, it is conceivable to apply the adhesive tape after finely cutting the adhesive tape, but workability will significantly deteriorate, and the desired waterproofing property is difficult to obtain. On the other hand, the thread-like adhesive body according to the embodiment of the present invention can be firmly applied without causing a wrinkle or overlapping even when being applied to a part having a complicated shape such as a curved line, a curved surface, and an uneven shape, and can exhibit an excellent waterproofing property. Further, since such a thread-like adhesive body can be stuck to a part to be stuck at one time, that is, in one step, the thread-like adhesive body is excellent in workability and can be applied to an automation line.

The thread-like adhesive body according to the embodiment of the present invention can also be suitably used for temporary fixing (temporary tacking) of an article for temporarily fixing (temporarily tacking) one article to a surface of another article.

Further, after two articles are fixed (finally fixed) using the thread-like adhesive body according to the embodiment of the present invention, the thread-like adhesive body according to the embodiment of the present invention can be pulled out and removed, if necessary, from the two articles that are fixed (finally fixed).

As described above, the following matters are disclosed in the present specification.

[1] A thread-like adhesive body, including:

a core material; and
an adhesive that covers a surface in a longitudinal direction of the core material, in which
a standard deviation $3\sigma$ of lengths in a width direction of the thread-like adhesive body calculated by the following method is 100 $\mu$m or less, and
the core material is a multifilament thread having four or more filaments.

(Calculation Method)

An average value of the lengths in the width direction and the standard deviation $3\sigma$ of the lengths in the width direction of the thread-like adhesive body are values calculated by observing the thread-like adhesive body under a microscope, measuring lengths in the width direction at 10 points by an interval of 1 cm in the longitudinal direction, and calculating the average value and the standard deviation $3\sigma$ of these values. Note that the length in the width direction of the thread-like adhesive body is a maximum value at each measurement point.

[2] The thread-like adhesive body according to [1], in which a deposition amount of the adhesive is 20 mass% to 80 mass% relative to the core material.

[3] The thread-like adhesive body according to [1] or [2], in which a twist factor of the core material is 25 to 120.

[4] The thread-like adhesive body according to any one of [1] to [3], in which the core material is a braided cord.

[5] The thread-like adhesive body according to any one of [1] to [4], in which

the adhesive contains a base polymer and a tackifier resin, and
the tackifier resin is contained in an amount of 1 part by mass to 100 parts by mass relative to 100 parts by mass of the base polymer.

[6] The thread-like adhesive body according to any one of [1] to [5], in which the adhesive is an acrylic adhesive.

Examples

The present invention will be described in more detail below with reference to Examples, but the present invention is not limited to the following Examples in any way.

<Preparation of Acrylic Polymer Emulsion>

(Preparation of Acrylic Polymer Emulsion 1)

Into a reaction vessel equipped with a cooling tube, a nitrogen introduction tube, a thermometer, and a stirrer, 40 parts by mass of ion-exchanged water was added, and stirring was performed at 60°C for 1 hour or more while introducing nitrogen gas to carry out nitrogen substitution. To this reaction vessel, 0.1 part by mass of 2,2'-azobis[N-(2-carboxyethyl)-2-methylpropionamidine]n hydrate (polymerization initiator) was added. While the reaction solution was maintained at 60°C, a monomer emulsion A described below was gradually added dropwise thereto over 4 hours to allow an emulsion polymerization reaction to proceed.

Examples of the monomer emulsion A include an emulsion obtained by adding 85 parts by mass of 2-ethylhexyl acrylate (2EHA), 13 parts by mass of methyl methacrylate (MA), 1.25 parts by mass of acrylic acid (AA), 0.75 parts by mass of methacrylic acid (MAA), 0.05 parts by mass of lauryl mercaptan (chain transfer agent), 0.02 parts by mass of $\gamma$-methacryloxypropyltrimethoxysilane (manufactured by Shin-Etsu Chemical Co., Ltd., trade name: "KBM-503"), and 2 parts by mass of sodium polyoxyethylene lauryl sulfate (emulsifier) to 30 parts by mass of ion-exchanged water.

After completion of the dropwise addition of the monomer emulsion A, the reaction solution was further kept at 60°C for 3 hours and cooled to room temperature, and the pH thereof was then adjusted to 7 by addition of 10% ammonia water to obtain an acrylic polymer emulsion 1 (water-dispersible acrylic polymer).

(Preparation of Acrylic Polymer Emulsion 2)

Into a reaction vessel equipped with a cooling tube, a nitrogen introduction tube, a thermometer, and a stirrer, 40 parts by mass of ion-exchanged water was added, and stirring was performed at 60°C for 1 hour or more while introducing nitrogen gas to carry out nitrogen substitution. To this reaction vessel, 0.1 part by mass of 2,2'-azobis[N-(2-carboxyethyl)-2-methylpropionamidine]n hydrate (polymerization initiator) was added. While the reaction solution was maintained at 60°C, a monomer emulsion B described below was gradually added dropwise thereto over 4 hours to allow an emulsion polymerization reaction to proceed.

Examples of the monomer emulsion B include an emulsion obtained by adding 68 parts by mass of butyl acrylate (BA), 29.1 parts by mass of 2-ethylhexyl acrylate, 2.9 parts by mass of acrylic acid, 0.05 parts by mass of lauryl mercaptan (chain transfer agent), 0.03 parts by mass of $\gamma$-methacryloxypropyltrimethoxysilane (manufactured by Shin-Etsu Chemical Co., Ltd., trade name: "KBM-503"), and 2 parts by mass of sodium polyoxyethylene lauryl sulfate (emulsifier) to 25 parts by mass of ion-exchanged water.

After completion of the dropwise addition of the monomer emulsion B, the reaction solution was further kept at 60°C for 3 hours and cooled to room temperature, and the pH thereof was then adjusted to 7 by addition of 10% ammonia water to obtain an acrylic polymer emulsion 2 (water-dispersible acrylic polymer).

(Preparation of Acrylic Polymer Emulsion 3)

Into a reaction vessel equipped with a cooling tube, a nitrogen introduction tube, a thermometer, and a stirrer, 40 parts by mass of ion-exchanged water was added, and stirring was performed at 60°C for 1 hour or more while introducing nitrogen gas to carry out nitrogen substitution. To this reaction vessel, 0.1 part by mass of 2,2'-azobis[N-(2-carboxyethyl)-2-methylpropionamidine]n hydrate (polymerization initiator) was added. While the reaction solution was maintained at 60°C, a monomer emulsion C described below was gradually added dropwise thereto over 4 hours to allow an emulsion polymerization reaction to proceed.

Examples of the monomer emulsion C include an emulsion obtained by adding 86.6 parts by mass of butyl acrylate, 9.6 parts by mass of 2-ethylhexyl acrylate, 3.8 parts by mass of acrylic acid, 0.055 parts by mass of lauryl mercaptan (chain transfer agent), 0.07 parts by mass of $\gamma$-methacryloxypropyltrimethoxysilane (manufactured by Shin-Etsu Chemical Co., Ltd., trade name: "KBM-503"), and 2 parts by mass of sodium polyoxyethylene lauryl sulfate (emulsifier) to 29 parts by mass of ion-exchanged water.

After completion of the dropwise addition of the monomer emulsion C, the reaction solution was further kept at 60°C for 3 hours and cooled to room temperature, and the pH thereof was then adjusted to 7 by addition of 10% ammonia water to obtain an acrylic polymer emulsion 3 (water-dispersible acrylic polymer).

(Preparation of Acrylic Polymer Emulsion 4)

Into a reaction vessel equipped with a cooling tube, a nitrogen introduction tube, a thermometer, and a stirrer, 40 parts by mass of ion-exchanged water was added, and stirring was performed at 60°C for 1 hour or more while introducing nitrogen gas to carry out nitrogen substitution. To this reaction vessel, 0.1 part by mass of 2,2'-azobis[N-(2-carboxyethyl)-2-methylpropionamidine]n hydrate (polymerization initiator) was added. While the reaction solution was maintained at 60°C, a monomer emulsion D was gradually added dropwise thereto over 4 hours to allow an emulsion polymerization reaction to proceed.

Examples of the monomer emulsion D include an emulsion obtained by adding 98 parts by mass of 2-ethylhexyl acrylate, 1.25 parts by mass of acrylic acid, 0.75 parts by mass of methacrylic acid, 0.05 parts by mass of lauryl mercaptan (chain transfer agent), 0.02 parts by mass of γ-methacryloxypropyltrimethoxysilane (manufactured by Shin-Etsu Chemical Co., Ltd., trade name: "KBM-503"), and 2 parts by mass of sodium polyoxyethylene lauryl sulfate (emulsifier) to 30 parts by mass of ion-exchanged water.

After completion of the dropwise addition of the monomer emulsion D, the reaction solution was further kept at 60°C for 3 hours and cooled to room temperature, and the pH thereof was then adjusted to 7 by addition of 10% ammonia water to obtain an acrylic polymer emulsion 4 (water-dispersible acrylic polymer).

<Preparation of Adhesive Liquid (Adhesive Composition)>

(Preparation of Adhesive Liquid 1)

A tackifier resin emulsion (manufactured by Arakawa Chemical Industries, Ltd., trade name: "Tamanol E200NT") was added so that the tackifier resin was 35 parts by mass per 100 parts by mass of the acrylic polymer contained in the acrylic polymer emulsion 1. Further, ion-exchanged water was added to dilute the solid content to 45 mass%, and then 10 mass% ammonia water as a pH adjuster and polyacrylic acid (manufactured by Toagosei Co., Ltd., trade name "Aron B-500") as a thickener were used to adjust the pH and viscosity to those suitable for coating, thereby obtaining an adhesive liquid 1.

(Preparation of Adhesive Liquid 2)

A tackifier resin emulsion (manufactured by Arakawa Chemical Industries, Ltd., trade name: "SUPER ESTER E865NT") was added so that the tackifier resin was 32 parts by mass per 100 parts by mass of the acrylic polymer contained in the acrylic polymer emulsion 1. Further, ion-exchanged water was added to dilute the solid content to 45 mass%, and then 10 mass% ammonia water as a pH adjuster and polyacrylic acid as a thickener were used to adjust the pH and viscosity to those suitable for coating, thereby obtaining an adhesive liquid 2.

(Preparation of Adhesive Liquid 3)

A tackifier resin emulsion (manufactured by Arakawa Chemical Industries, Ltd., trade name: "Tamanol E200NT") was added so that the tackifier resin was 35 parts by mass per 100 parts by mass of the acrylic polymer contained in the acrylic polymer emulsion 3. Further, ion-exchanged water was added to dilute the solid content to 45 mass%, and then 10 mass% ammonia water as a pH adjuster and polyacrylic acid as a thickener were used to adjust the pH and viscosity to those suitable for coating, thereby obtaining an adhesive liquid 3.

(Preparation of Adhesive Liquid 4)

A tackifier resin emulsion (manufactured by Arakawa Chemical Industries, Ltd., trade name: "Tamanol E200NT") was added so that the tackifier resin was 35 parts by mass per 100 parts by mass of the acrylic polymer contained in the acrylic polymer emulsion 2. Further, ion-exchanged water was added to dilute the solid content to 45 mass%, and then 10 mass% ammonia water as a pH adjuster and polyacrylic acid as a thickener were used to adjust the pH and viscosity to those suitable for coating, thereby obtaining an adhesive liquid 4.

(Preparation of Adhesive Liquid 5)

An adhesive liquid 5 was obtained in the same manner as the adhesive liquid 1, except that the amount of the tackifier resin emulsion added was changed so that the tackifier resin was 32 parts by mass per 100 parts by mass of the acrylic polymer.

(Preparation of Adhesive Liquid 6)

A tackifier resin emulsion (manufactured by Arakawa Chemical Industries, Ltd., trade name: "SUPER ESTER E865NT") was added so that the tackifier resin was 20 parts by mass per 100 parts by mass of the acrylic polymer contained in the acrylic polymer emulsion 4. Further, ion-exchanged water was added to dilute the solid content to 45 mass%, and then 10 mass% ammonia water as a pH adjuster and polyacrylic acid as a thickener were used to adjust the pH and viscosity to those suitable for coating, thereby obtaining an adhesive liquid 6.

<Production of Thread-like Adhesive Body>

(Example 1)

As the core material, a multifilament thread (fineness: 1169 dtex, number of filaments: 336) was prepared by twisting 150 times per meter of seven polyethylene terephthalate (PET) fibers (manufactured by Teijin Frontier Co., Ltd.) (fineness: 167 dtex, number of filaments: 48).
A viscosity of the adhesive liquid 1 was adjusted, and the core material was coated by dipping using a coating roller. Thereafter, drying was performed at 100°C for 1 minute to obtain a thread-like adhesive body with a glue amount (adhesive amount) of 40.0 mg/m.

(Examples 2 to 6)

Thread-like adhesive bodies were produced in the same manner as in Example 1, except that the numbers of twists of the multifilament threads were changed to 70, 90, 110, 200, and 300 twists per meter, respectively. The adhesive amounts were 73.8 mg/m, 42.2 mg/m, 41.5 mg/m, 36.7 mg/m, and 38.3 mg/m, respectively.

(Examples 7, 8, and 9)

Thread-like adhesive bodies were produced in the same manner as in Example 3, except that the adhesive liquids 3, 4, and 2 were used instead of the adhesive liquid 1 to produce the thread-like adhesive bodies. The adhesive amounts were 33.8 mg/m, 39.8 mg/m, and 49.0 mg/m, respectively.

(Example 10)

As the core material, a multifilament thread was prepared, which was a hollow cord made of 16 untwisted PET fibers (fineness: 62 dtex).
A viscosity of the adhesive liquid 5 was adjusted, and the core material was coated by dipping using a coating roller. Thereafter, drying was performed at 100°C for 1 minute to obtain a thread-like adhesive body with an adhesive amount of 43.3 mg/m.

(Comparative Example 1)

A thread-like adhesive body was produced in the same manner as in Example 1, except that the number of twists of the multifilament thread was changed to 70 twists per meter. The adhesive amount was 51.0 mg/m.

(Comparative Example 2)

A thread-like adhesive body was produced in the same manner as in Example 1, except that the adhesive liquid 6 was used instead of the adhesive liquid 1, and the number of twists of the multifilament thread was changed to 350 twists per meter. The adhesive amount was 130.0 mg/m.

(Comparative Example 3)

A thread-like adhesive body was produced in the same manner as in Example 1, except that the number of twists of the multifilament thread was changed to 30 twists per meter. The adhesive amount was 137.0 mg/m.

<Properties of Thread-like Adhesive Body>

(Adhesive Amount and Deposition Amount of Adhesive to Core Material)

The adhesive amount was calculated using the following Formula (2) from a mass W1 [mg/m] per unit length of the core material and a mass W2 [mg/m] per unit length of the thread-like adhesive body coated with the adhesive after drying.

$$\text{Adhesive amount [mg/m]} = \text{W2 [mg/m]} - \text{W1 [mg/m]} \quad (2)$$

The deposition amount of the adhesive to the core material was calculated using the following Formula (3).

$$\text{Deposition amount [mass\%] of adhesive to core material} = \{(\text{W2} - \text{W1})/\text{W1}\} \times 100 \quad (3)$$

(3)

(Length in Width Direction and Variation in Length in Width Direction of Thread-like Adhesive Body)

The thread-like adhesive bodies of Examples and Comparative Examples were observed under a microscope, and the length in the width direction of the thread-like adhesive body (length in a direction perpendicular to the longitudinal direction) was measured at 10 points by an interval of 1 cm in the longitudinal direction, and the average value m and the standard deviation ($3\sigma$) were calculated.

Specifically, the thread-like adhesive body was placed on the stage of the microscope, and a position thereof was finely adjusted so that latitude lines of the grid-like scale displayed on an observation screen were parallel to the long axis of the thread-like adhesive body. An observation magnification of the microscope was set to 30 times, and a length of the short axis (length in the width direction) of the thread-like adhesive body was measured at 10 points by an interval of 1 cm in the longitudinal direction. Note that the length in the width direction of the thread-like adhesive body was a maximum value at each measurement point.

The obtained measurement values ($X_1$, $X_2$, ..., $X_{10}$) were used to calculate the average value m as the average value of the lengths in the width direction of the thread-like adhesive body. The standard deviation $3\sigma$ ($\mu$m) was calculated by the following Formula (4).

[Math. 3]

$$3\sigma = 3 \times \sqrt{\frac{(X_1 - m)^2 + (X_2 - m)^2 + \cdots\cdots + (X_n - m)^2}{n - 1}} \quad (4)$$

In Formula (4), $X_1$, $X_2$, ..., $X_n$ represent each measurement value, m represents the average value, and n represents an amount of data. In the above measurement method, n is 10.

<Evaluation>

The obtained thread-like adhesive bodies were evaluated as follows. Results are shown in Tables 1 to 3.

(Adhesive Strength)

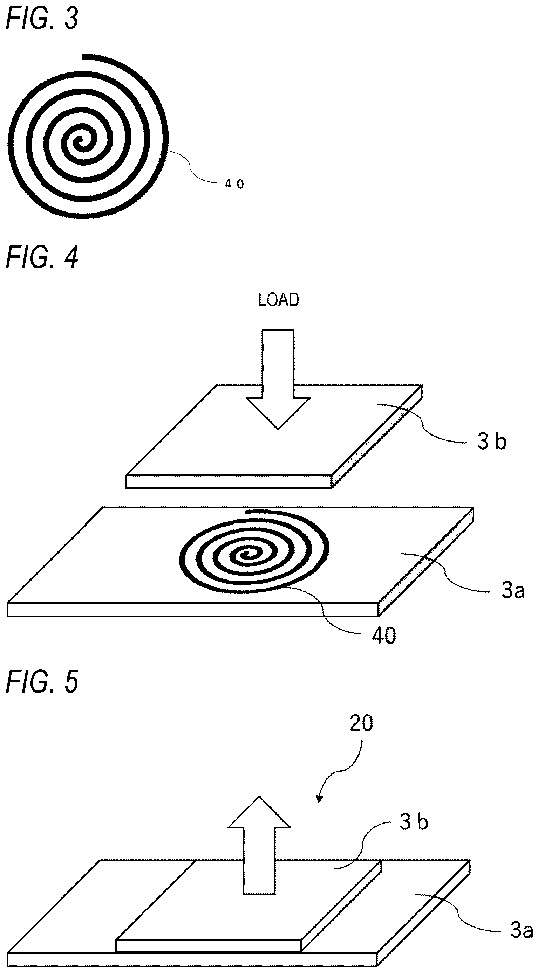

The adhesive strength of the thread-like adhesive body was evaluated by the following cleavage peeling force. FIGS. 3 to 5 are diagrams illustrating a method for evaluating the adhesive strength of the thread-like adhesive body according to the embodiment of the present invention.

An obtained thread-like adhesive body 40 was placed on a stainless steel (SUS) plate 3a (W (mm) $\times$ D (mm) $\times$ H (mm) = 30 $\times$ 60 $\times$ 2) in a shape of a spiral circle with an outer diameter of 25 mm, 5 circuits, a pitch distance of 1.5 mm, and a usage amount of 27 cm as illustrated in FIG. 3. A stainless steel (SUS) plate 3b (W (mm) $\times$ D (mm) $\times$ H (mm) = 30 $\times$ 30 $\times$ 3) as illustrated in FIG. 4 was placed thereon and pressed with a pressing machine under a pressure of 0.35 MPa for 10 seconds to obtain a bonded body 20 for evaluation.

The obtained bonded body 20 for evaluation was set in a tensile tester (" Shimadzu Autograph AG-100M2" manufactured by Shimadzu Corporation), and the plates were peeled off in a direction perpendicular to a plane of the plate 3b as illustrated in FIG. 5 under conditions of 23°C and a tensile speed of 300 mm/min, and an obtained stress value was defined as the adhesive strength (MPa).

(Waterproofing Property)

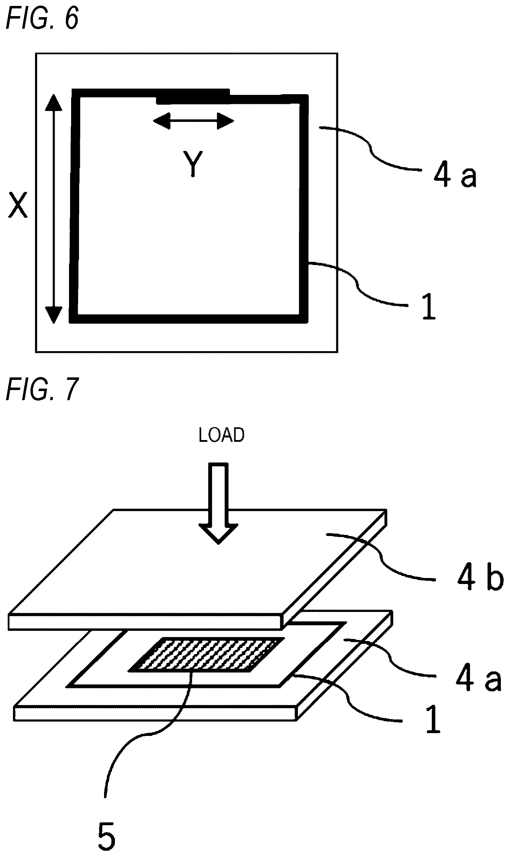

Using the thread-like adhesive body of each example, a polycarbonate (PC) resin plate (3 cm on a side) was bonded to a slightly larger PC resin plate (a square with 4 cm on a side) to prepare a test piece. Specifically, first, as illustrated in FIG. 6, the thread-like adhesive body 1 was disposed on one polycarbonate resin plates 4a in a square shape with a side length X of 2.5 cm and an overlapping portion Y of tip portions of the thread-like adhesive body of 1 cm. Then, nonwoven fabric 5 (a square with each side being 1.5 cm) was placed inside the square shape, and the other PC resin plate 4b was laminated thereon as illustrated in FIG. 7, and pressed with a pressing machine for 10 seconds under a pressure of 0.35 MPa to obtain a bonded body for evaluation.

Next, the obtained test piece was placed in a water bath and kept at a depth of 1 m for 30 minutes, and then the test piece was taken out.

If water did not penetrate into the area surrounded by the thread-like adhesive body of the taken-out test piece, the test piece was evaluated as pass, and if water penetrated, the test piece was evaluated as fail.

In the following Tables 1 to 3, the polymer column indicates a monomer type and a blending amount (parts by mass) of each monomer constituting the polymer.

[Table 1]

| | | Example 1 | Example 2 | Example 3 | Example 4 | Example 5 | Example 6 |
|---|---|---|---|---|---|---|---|
| Adhesive | Adhesive liquid | Adhesive liquid 1 | Adhesive liquid 1 | Adhesive liquid 1 | Adhesive liquid 1 | Adhesive liquid 1 | Adhesive liquid 1 |
| | Polymer | 2EHA/MA/AA/MAA = 85/13/1.25/0.75 | 2EHA/MA/AA/MAA = 85/13/1.25/0.75 | 2EHA/MA/AA/MAA = 85/13/1.25/0.75 | 2EHA/MA/AA/MAA = 85/13/1.25/0.75 | 2EHA/MA/AA/MAA = 85/13/1.25/0.75 | 2EHA/MA/AA/MAA = 85/13/1.25/0.75 |
| | Tackifier resin | E200NT | E200NT | E200NT | E200NT | E200NT | E200NT |
| | Polymer/tackifier resin | 100/35 | 100/35 | 100/35 | 100/35 | 100/35 | 100/35 |
| Core material | Type | Twisted thread | Twisted thread | Twisted thread | Twisted thread | Twisted thread | Twisted thread |
| | Number of twists | 150 | 70 | 90 | 110 | 200 | 300 |
| | Twist factor K | 51 | 24 | 31 | 37 | 68 | 102 |
| Thread-like adhesive body | Adhesive amount [mg/m] | 40.0 | 73.8 | 42.2 | 41.5 | 36.7 | 38.3 |
| | Deposition amount [mass%] of adhesive to core material | 33.9 | 62.6 | 35.7 | 35.2 | 31.1 | 32.5 |
| | Length in width direction — Average value [$\mu$m] | 410 | 469 | 453 | 407 | 405 | 410 |
| | Length in width direction — $3\sigma$ [$\mu$m] | 72.6 | 36.9 | 99.0 | 97.4 | 52.2 | 37.8 |
| Evaluation | Adhesive strength [Mpa] | 81.8 | 115.4 | 68.2 | 75.1 | 41.6 | 22.7 |
| | Waterproofing property | Pass | Pass | Pass | Pass | Pass | Pass |

[Table 2]

| | | | Example 7 | Example 8 | Example 9 | Example 10 |
|---|---|---|---|---|---|---|
| Adhesive | Adhesive liquid | | Adhesive liquid 3 | Adhesive liquid 4 | Adhesive liquid 2 | Adhesive liquid 5 |
| | Polymer | | BA/2EHA/AA = 86.6/9.6/3.8 | BA/2EHA/AA = 68/29.1/2.9 | 2EHA/MA/AA/MAA = 85/13/1.25/0.75 | 2EHA/MA/AA/MAA = 85/13/1.25/0.75 |
| | Tackifier resin | | E200NT | E200NT | E865NT | E200NT |
| | Polymer/tackifier resin | | 100/35 | 100/35 | 100/32 | 100/32 |
| Core material | Type | | Twisted thread | Twisted thread | Twisted thread | Hollow cord |
| | Number of twists | | 90 | 90 | 90 | - |
| | Twist factor K | | 31 | 31 | 31 | - |
| Thread-like adhesive body | Adhesive amount [mg/m] | | 33.8 | 39.8 | 49.0 | 43.3 |
| | Deposition amount [mass%] of adhesive to core material | | 28.7 | 33.8 | 41.5 | 36.7 |
| | Thread diameter | Average value [μm] | 386 | 408 | 410 | 473 |
| | | 3σ [μm] | 57.0 | 58.2 | 60.0 | 27.0 |
| Evaluation | Adhesive strength [Mpa] | | 70.0 | 60.1 | 46.6 | 70.0 |
| | Waterproofing property | | Pass | Pass | Pass | Pass |

[Table 3]

| | | | Comparative Example 1 | Comparative Example 2 | Comparative Example 3 |
|---|---|---|---|---|---|
| Adhesive | Adhesive liquid | | Adhesive liquid 1 | Adhesive liquid 6 | Adhesive liquid 1 |
| | Polymer | | 2EHA/MA/AA/MAA = 85/13/1.25/0.75 | 2EHA/AA/MAA = 98/1.25/0.75 | 2EHA/MA/AA/MAA = 85/13/1.25/0.75 |
| | Tackifier resin | | E200NT | E865NT | E200NT |
| | Polymer/tackifier resin | | 100/35 | 100/20 | 100/35 |
| Core material | Type | | Twisted thread | Twisted thread | Twisted thread |
| | Number of twists | | 70 | 350 | 30 |
| | Twist factor K | | 24 | 166 | 10 |
| Thread-like adhesive body | Adhesive amount [mg/m] | | 51.0 | 130.0 | 137.0 |
| | Deposition amount [mass%] of adhesive to core material | | 43.2 | 110.2 | 116.1 |
| | Thread diameter | Average value [μm] | 431 | 520 | 538 |
| | | 3σ [μm] | 116.0 | 150.0 | 211.2 |

(continued)

|  |  | Comparative Example 1 | Comparative Example 2 | Comparative Example 3 |
|---|---|---|---|---|
| Evaluation | Adhesive strength [Mpa] | 71.6 | 36.8 | 36.8 |
|  | Waterproofing property | Fail | Fail | Fail |

The results shown in Tables 1 to 3 demonstrate that the thread-like adhesive bodies of Examples 1 to 10, in which the standard deviation $3\sigma$ of the lengths in the width direction of the thread-like adhesive bodies is 100 $\mu$m or less, have an excellent waterproofing property. Examples 1 to 10 also had sufficient adhesive strength as thread-like adhesive bodies.

In contrast, the thread-like adhesive bodies of Comparative Examples 1 to 3, in which $3\sigma$ exceeded 100 $\mu$m, did not provide a desired waterproofing property.

The present invention is not limited to the embodiments described above, and can be made in various modifications within the scope of the claims, and embodiments obtained by appropriately combining technical methods disclosed in different embodiments are also included in the technical scope of the present invention.

INDUSTRIAL APPLICABILITY

By forming the thread-like adhesive body of the present invention, it is possible to provide a thread-like adhesive body having an excellent waterproofing property.

While the present invention has been described in detail with reference to specific embodiments, it will be apparent to those skilled in the art that various changes and modifications can be made without departing from the spirit and scope of the present invention.

The present application is based on a Japanese Patent Application (No. 2023-58693) filed on March 31, 2023, the contents of which are incorporated herein by reference.

REFERENCE SIGNS LIST

40 thread-like adhesive body

2a, 2b housing

3a, 3b plate

4a, 4b resin plate

5 nonwoven fabric

10 bonded body

**Claims**

1. A thread-like adhesive body, comprising:

   a core material; and
   an adhesive that covers a surface in a longitudinal direction of the core material, wherein
   a standard deviation $3\sigma$ of lengths in a width direction of the thread-like adhesive body calculated by the following method is 100 $\mu$m or less, and
   the core material is a multifilament thread having four or more filaments.

   (Calculation Method)
   An average value of the lengths in the width direction and the standard deviation $3\sigma$ of the lengths in the width direction of the thread-like adhesive body are values calculated by observing the thread-like adhesive body under a microscope, measuring lengths in the width direction at 10 points by an interval of 1 cm in the longitudinal direction, and calculating the average value and the standard deviation $3\sigma$ of these values. Note that the length in the width direction of the thread-like adhesive body is a maximum value at each measurement point.

2. The thread-like adhesive body according to claim 1, wherein
a deposition amount of the adhesive is 20 mass% to 80 mass% relative to the core material.

3. The thread-like adhesive body according to claim 1 or 2, wherein
a twist factor of the core material is 25 to 120.

4. The thread-like adhesive body according to claim 1 or 2, wherein
the core material is a braided cord.

5. The thread-like adhesive body according to claim 1 or 2, wherein

the adhesive contains a base polymer and a tackifier resin, and
1 part by mass to 100 parts by mass of the tackifier resin is contained per 100 parts by mass of the base polymer.

6. The thread-like adhesive body according to claim 1 or 2, wherein
the adhesive is an acrylic adhesive.

*FIG. 1*

LOAD

2 b

1

2a

*FIG. 2*

10

2 b

Z

1

2a

FIG. 3

4 0

FIG. 4

LOAD

3 b

40

3a

FIG. 5

20

3 b

3a

*FIG. 6*

*FIG. 7*

**INTERNATIONAL SEARCH REPORT**

| International application No. |
| --- |
| **PCT/JP2024/012271** |

| A. | CLASSIFICATION OF SUBJECT MATTER |
| --- | --- |

*C09J 7/38*(2018.01)i; *C09J 133/00*(2006.01)i
FI: C09J7/38; C09J133/00

According to International Patent Classification (IPC) or to both national classification and IPC

| B. | FIELDS SEARCHED |
| --- | --- |

Minimum documentation searched (classification system followed by classification symbols)

C09J1/00-201/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2021-55091 A (NITTO DENKO CORPORATION) 08 April 2021 (2021-04-08)<br>entire text | 1-6 |
| A | JP 2021-55252 A (NITTO DENKO CORPORATION) 08 April 2021 (2021-04-08)<br>entire text | 1-6 |
| A | JP 2021-161407 A (NITTO DENKO CORPORATION) 11 October 2021 (2021-10-11)<br>entire text | 1-6 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 June 2024** | **25 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/012271**

| Patent document cited in search report | | | Publication date (day/month/year) | Patent family member(s) | | | Publication date (day/month/year) |
|---|---|---|---|---|---|---|---|
| JP | 2021-55091 | A | 08 April 2021 | US | 2022/0363960 | A1 | |
| | | | | whole document | | | |
| | | | | WO | 2021/065838 | A1 | |
| | | | | TW | 202128912 | A | |
| JP | 2021-55252 | A | 08 April 2021 | US | 2022/0348806 | A1 | |
| | | | | entire text | | | |
| | | | | WO | 2021/065837 | A1 | |
| | | | | TW | 202120657 | A | |
| JP | 2021-161407 | A | 11 October 2021 | US | 2023/0158754 | A1 | |
| | | | | entire text | | | |
| | | | | WO | 2021/200762 | A1 | |
| | | | | TW | 202144515 | A | |
| | | | | CN | 115335478 | A | |
| | | | | KR | 10-2022-0160589 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020076066 A